# EUROPÄISCHE PATENTSCHRIFT

(11) **EP 1 654 176 B1**
(45) Veröffentlichungstag und Bekanntmachung des Hinweises auf die Patenterteilung: **19.08.2009**
(21) Anmeldenummer: 04741996.5
(22) Anmeldetag: 15.07.2004
(51) Int. Cl.: B65G 47/72, B65G 53/22

(54) **VORRICHTUNG ZUM EINLEITEN VON SCHÜTTGUT IN EINE VIELZAHL VON FÖRDERLEITUNGEN**
DEVICE FOR INTRODUCING BULK MATERIAL INTO A PLURALITY OF FEED PIPES
DISPOSITIF POUR L'INTRODUCTION DE MATIERES EN VRAC DANS DES CONDUITES D'ACHEMINEMENT

(30) Priorität: 12.08.2003 EP 03102503
(43) Veröffentlichungstag der Anmeldung: 10.05.2006
(73) Patentinhaber: PAUL WURTH S.A., 1122 Luxembourg (LU)
(72) Erfinder: KROEMMER, Yvan, 8360 Goetzingen (LU)
(74) Vertreter: Office Freylinger
(86) Internationale Anmeldenummer: PCT/EP2004/051508
(87) Internationale Veröffentlichungsnummer: WO 2005/014447

(56) Entgegenhaltungen:
- EP-A- 0 349 690
- WO-A-02/22476
- DE-C- 196 014
- DE-C- 291 436
- DE-U- 29 500 305
- FR-A- 1 507 545

## Beschreibung

Die vorliegenden Erfindung betrifft eine Vorrichtung zum Einleiten von Schüttgut in mehrere Förderleitungen. Die Erfindung betrifft insbesondere eine solche Vorrichtung die sich zum Einleiten von schwer fließbarem Schüttgut eignet Eine derartige Vorrichtung findet ihre Anwendung beispielsweise in einer Vorrichtung zum Eindüsen von Kunststoff in einen Schachtofen, bei der anstelle von gemahlener Kohle zerkleinerte Kunststoffabfälle in den Schachtofen eingeblasen werden. Hierzu werden die in einem Bunker gelagerten zerkleinerten Kunststoffabfälle in eine Förderleitung eingeleitet und unter hohem Druck durch diese zu den in der Schachtofenwand angeordneten Einblasdüsen gefördert.

Als Vorrichtungen zum Einleiten von Schüttgut unter Druck in eine Transportleitung sind beispielsweise Zellenradschleusen bekannt, die unterhalb eines Vorratsbunkers für das Schüttgut angeordnet werden. Ein Zellenrad, bestehend aus einer Nabe und mehreren radialen Flügeln, das drehbar in einem Zellenradgehäuse angeordnet ist, unterteilt dieses in mehrere Kammern. Über eine Beschickungsöffnung an der Oberseite des Zellenradgehäuses gelangt das Schüttgut in eine der Kammern und wird nach einer Drehung des Zellenrades um beispielsweise 180° über eine Auslassöffnung an der Unterseite des Gehäuses in die Förderleitung eingeleitet, Eine derartige Zellenradschleuse wird beispielsweise in der WO-A-96/22241 vorgestellt

Probleme treten bei derartigen mechanischen Einleitvorrichtungen insbesondere beim Fördern von schwer fließbarem, leicht faserigem Material, wie z.B. zerkleinerten Kunststoffabfällen auf Das von den Flügeln des Zellenrades weiterbewegte Material verdichtet sich bei der Drehung des Zellenrades sehr leicht unter seinem Eigengewicht, so dass sich seine Fließeigenschaften weiterhin verschlechtern und ein Einleiten in die Förderleitung deutlich erschwert oder gar unmöglich wird. Dies führt zu häufigen Verstopfungen der Einleitvorrichtung, wodurch ein kontinuierlicher Betrieb der Anlage immer wieder gestört wird. Überdies dringt das verdichtete Material in die Zwischenräume zwischen den Flügeln des Zellenrades und dem Zellenradgehäuse ein und kann zum Stillstand der Einleitvorrichtung führen.

Aus diesem Grund wird in der WO-A-02/22476 eine Vorrichtung mit einer Wirbelkammer vorgeschlagen, in der das schwer fließbare Material in einen aufgelockerten Zustand versetzt wird. Eine Förderleitung ist an die Wirbelkammer derart angeschlossen, dass die Förderleitung eine Eintrittsöffnung in einer Wandung der Wirbelkammer ausbildet. Vor der Eintrittsöffnung ist in der Wirbelkammer eine Gaseinlassdüse für ein Druckgas angeordnet, die im Betrieb eine Gasströmung in Richtung der Eintrittsöffnung der Förderleitung erzeugt. Durch die Ausbildung der Wirbelzone unmittelbar vor der Eintrittsöffnung in die Förderleitung wird ein Verdichten des schwer fließenden Schüttguts vor dem Eintritt in die Förderleitung wirksam verhindert. Die seitliche Anordnung der Eintrittsöffnung verhindert dabei, dass nicht aufgelockertes Material unter seinem Eigengewicht in die Förderleitung gelangt. Die oben angesprochenen Verstopfungen und die hierdurch bedingten Stillstände der Anlage können daher weitestgehend verhindert werden.

Die WO-A-02/22476 beschreibt weiterhin ein Einblasgefäß zum Einleiten von Schüttgut in eine Vielzahl von Förderleitungen. Dieses Einblasgefäß umfasst einen Druckbehälter, dessen Boden konisch nach innen eingestülpt ist, so dass der Druckbehälter einen nach unten hin schmaler werdenden ringförmigen Querschnitt aufweist. In dem unteren ringförmigen Bereich sind radial von innen Förderleitungen angeschlossen, denen im Inneren der ringförmigen Kammer entsprechend viele Gaseinlassdüsen gegenüberstehen, die radial von außen in den ringförmigen Bereich montiert sind. Mit einem solchen Einblasgefäß lässt sich Schüttgut zuverlässig auf eine Vielzahl von Förderleitungen aufteilen. Allerdings ist ein solches Einblasgefäß aufgrund der konischen Einstülpung des Gefäßbodens in der Herstellung verhältnismäßig aufwendig. Außerdem ist die radial nach innen gerichtete Wandung des ringförmigen Bereichs nur sehr schwer zu bearbeiten, so dass die korrekte Anordnung der Förderleitungen Probleme bereitet.

### Aufgabe der Erfindung

Aufgabe der vorliegenden Erfindung ist es folglich, eine verbesserte Vorrichtung zum Einleiten von Schüttgut in eine oder mehrere Transportleitungen vorzuschlagen.

### Allgemeine Beschreibung der Erfindung

Diese Aufgabe wird erfindungsgemäß gelöst durch eine Vorrichtung nach Anspruch 1 Diese Vorrichtung zum Einleiten von Schüttgut in eine Vielzahl von Förderleitungen umfasst ein Verteilergehäuse mit einer unteren Bodenplatte, in das eine Vielzahl von Förderleitungen von außen derart anschließbar ist, dass jede Förderleitung eine Eintrittsöffnung in einer Wandung des Verteilergehäuses ausbildet Den Eintrittsöffnungen ist jeweils eine Vorrichtung zur Erzeugung einer Gasströmung derart zugeordnet, dass die Gasströmung in Richtung der Eintrittsöffnung gerichtet ist. Erfindungsgemäß sind die Eintrittsöffnungen derart in der Bodenplatte ausgebildet, dass jeweils eine Achse der Eintrittsöffnung mit der Achse des Verteilergehäuses einen spitzen Winkel einschließt.

Im Gegensatz zu der oben beschriebenen Vorrichtung, sind die Eintrittsöffnungen der Förderleitungen bei der vorliegenden Erfindung in einer Bodenplatte des Verteilergehäuses angeordnet. Eine solche Bodenplatte lässt sich im Gegensatz zu einer radial nach innen gewandten Wand eines Behälters leicht bearbeiten, so dass die Anordnung der Eintrittsöffnungen bei der vorliegenden Vorrichtung im Verhältnis zum Stand der Technik stark vereinfacht wird Darüber hinaus entfällt bei der vorliegenden Vorrichtung die aufwendige Verformung des Gefäßbodens

Die Eintrittsöffnungen sind vorzugsweise derart in der Bodenplatte angeordnet, dass deren Achsen bezüglich der Achse des Verteilergehäuses nach außen geneigt sind. Die Vorrichtung zur Erzeugung einer Gasströmung weist beispielsweise eine an eine Druckgasversorgung angeschlossene Gasdüse auf, die derart bezüglich der Eintrittsöffnung angeordnet ist, dass die gedachte Verlängerung ihrer Achse mit der Achse der Eintrittsöffnung zusammenfällt. Da bei der vorliegenden Erfindung die Achse der Eintrittsöffnungen einen spitzen Winkel mit der Achse des Verteilergehäuses einschließt, gilt dies auch für die Achse der Gasdüse. Die Vorrichtungen zur Erzeugung der Gasströmung können aufgrund dieser Ausrichtung folglich in einer seitliche Wandung der Verteilerkammer angeordnet sein.

Es ist anzumerken, dass die Ausrichtung der Gasdüse in einem spitzen Winkel zu der Achse des Verteilergehäuses vorteilhaft den Raumbedarf der Vorrichtung reduziert. In der Tat ist die radiale Annordnung der Gaseinlassdüsen in der bekannten Vorrichtung einer der Gründe für einen verhältnismäßig hohen radialen Raumbedarf der Anlage. Bei der vorliegenden Erfindung wird dieser radiale Raumbedarf aufgrund der bezüglich der Achse des Verteilergehäuses geneigt angeordneten Vorrichtungen zum Erzeugen der Gasströmung wesentlich verringert. Dabei ist leicht ersichtlich, dass der radiale Raumbedarf umso kleiner wird, je spitzer der Winkel zwischen der Achse der Eintrittsöffnungen bzw. der Gasdüsen und der Achse des Verteilergehäuses ist. In der Praxis wird der Winkel daher möglichst klein gewählt werden, wobei zu beachten ist, dass ein Stutzen am Verteilergehäuse, in dem die Vorrichtung zur Erzeugung der Gasströmung montiert wird, noch von allen Seiten zugänglich sein soll.

In einer einfachen Ausgestaltung der Erfindung weist die Oberseite der Bodenplatte einen ringförmigen Bereich auf, der in radialer Richtung nach außen und nach unten geneigt ist, und wobei die Eintrittsöffnungen der Förderleitungen in dem ringförmigen Bereich der Bodenplatte ausgebildet sind. In einer Ausgestaltung, bei der das Verteilergehäuse zylinderförmig ausgestaltet ist, ist der ringförmige Bereich der Bodenplatte dabei bevorzugt an der Peripherie der Bodenplatte angeordnet.

In einer bevorzugten Ausgestaltung der Erfindung umfasst die Vorrichtung ein Führungselement für das Schüttgut, das derart oberhalb der Bodenplatte in dem Verteilergehäuse angeordnet ist, dass hinabgleitendes Schüttgut zu den Eintrittsöffnungen der Förderleitungen hingeleitet wird. Ein derartiges Führungselement kann beispielsweise konusförmig ausgebildet sein wobei auf einer Außenfläche des Führungselements radial sich nach außen erstreckende Leitbleche angeordnet sind.

Um Materialverdichtungen und Brückenbildung zu vermeiden, ist das Führungselement bevorzugt um eine Längsachse drehbar in der Bodenplatte gelagert. Eine Drehung des Führungselements verhindert, dass sich insbesondere schwer fliessbares Schüttgut an einzelnen Stellen in dem Verteilergehäuse ablagern und verdichten kann. In einer bevorzugten Ausgestaltung wird das Führungselement mittels eines Aktuators in eine Hin- und Herbewegung um eine Längsachse versetzt, d.h. das Führungselement führt eine oszillierende Drehbewegung um die Längsachse aus. Eine solche Hin- und Herbewegung weist gegenüber einer kontinuierlichen Drehbewegung den Vorteil auf, dass der Verschleiß an den Leitblechen reduziert wird.

Es bleibt anzumerken, dass das Verteilergehäuse einstückig mit einem Vorratsbehälter ausgestaltet sein kann oder an einen Vorratsbehälter anflanschbar ist.

### Detaillierte Beschreibung anhand der Figuren

Im folgenden wird eine Ausgestaltung der Erfindung anhand der beiliegenden Figuren beschrieben. Diese zeigen:
- Fig. 1:: einen Schnitt durch eine Ausgestaltung einer Vorrichtung zum Einleiten von Schüttgut in eine Vielzahl von Förderleitungen;
- Fig. 2:: einen vergrößerten Ausschnitt der Eintrittsöffnung der Vorrichtung der Fig. 1.

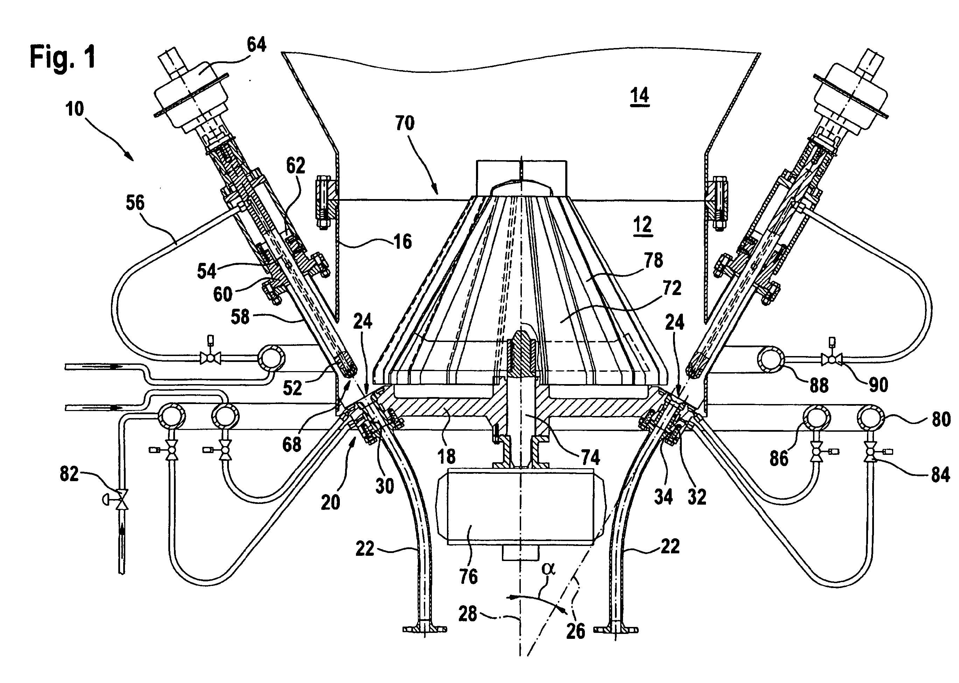

Fig. 1 zeigt einen Schnitt durch eine Ausgestaltung einer Vorrichtung 10 zum Einleiten von Schüttgut in eine Vielzahl von Förderleitungen. Die Vorrichtung 10 umfasst ein Verteilergehäuse 12, das an einen Vorratsbehälter 14 für Schuttgut anflanschbar ist. Das Verteilergehäuse 12, das vorzugsweise zylindrisch ausgestaltet ist, umfasst eine umlaufende Wandung 16 und eine Bodenplatte 18, die beispielsweise mit der Wandung 16 verschweißt ist.

Die Bodenplatte 18 weist an ihrer Peripherie einen ringförmigen Bereich 20 auf, der in radialer Richtung nach außen und nach unten geneigt ist. In diesem Bereich 20 der Bodenplatte sind eine Vielzahl von Förderleitungen 22 für das Schüttgut derart von unten anschließbar, dass jede Förderleitung 22 in dem ringförmigen Bereich 20 jeweils eine Eintrittsöffnung 24 für das zu fördernde Schüttgut ausbildet.

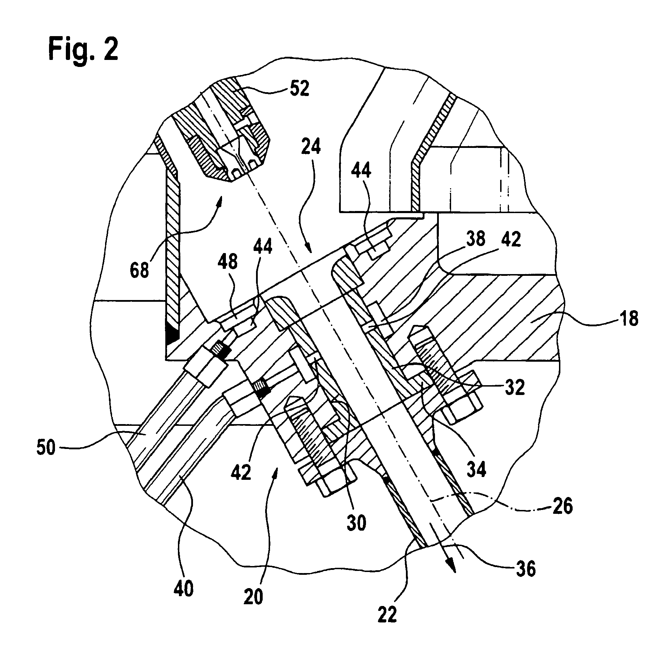

Die Eintrittsöffnungen 24 sind derart in dem ringförmigen Bereich 20 der Bodenplatte 18 angeordnet, dass jeweils eine Achse 26 der Eintrittsöffnung 24 mit einer Achse 28 des Verteilergehäuses 12 einen spitzen Winkel α einschließt. In der dargestellten Ausführung weist die Bodenplatte 18 dazu in dem ringförmigen Bereich 20 für jede Eintrittsöffnung jeweils eine Bohrung 30 auf, in die ein die Geometrie der Eintrittsöffnung 24 definierendes Einsatzteil 32 eingesetzt ist (siehe auch Fig. 2). Das Einsatzteil 32 ist vorzugsweise von der Unterseite der Bodenplatte her in die Bohrung 30 eingesetzt und weist an seinem unteren Ende einen radial sich nach außen erstreckenden Kragen 34 auf. Auf diese Weise kann das Einsatzteil 32 durch Anflanschen der Förderleitung 22 in der Bohrung 30 arretiert werden.

In dem Einsatzteil 32 ist in Förderrichtung (dargestellt durch den Pfeil 36) stromabwärts unmittelbar hinter der Eintrittsöffnung 24 ein Ringkanal 38 um den Förderkanal ausgeführt, der von außen über einen oder mehrere Anschlüsse 40 mit einem Dosiergas beaufschlagt werden kann.

Weiterhin sind in dem Einsatzteil 32 mehrere Dosiergasdüsen 42 um den Förderkanal herum ausgeführt, die sich jeweils von dem Ringkanal 38 senkrecht zur Achse 26 der Förderleitung bis zum Förderkanal hin erstrecken und in diesem Einmündungen ausbilden. Wird der Ringkanal 38 mit einem Dosiergas unter hohem Druck beaufschlagt, strömt dieses durch die Einmündungen in die Förderleitung ein und bildet hier einen Förderstrom für das zu fördernde Material aus. Hierdurch wird Schüttgut, das durch die Eintrittsöffnung 24 in die Förderleitung 22 gelangt unmittelbar hinter der Eintrittsöffnung 24 von dem Förderstrom erfasst und weitergeleitet.

Es ist anzumerken, dass die Anschlüsse 40 der verschiedenen Eintrittsöffnungen 24 vorzugsweise über einen gemeinsamen Ringkanal 80 mit dem Dosiergas versorgt werden. Die Ringleitung wird vorzugsweise über ein Regelventil 82 mit einem konstanten Druck beaufschlagt der höher ist als der Druck in den einzelnen Förderleitungen 22. Die Beaufschlagung der einzelnen Förderleitungen über eine gemeinsame Förderleitung mit konstantem Druck sorgt vorteilhaft für eine gleichmäßige Verteilung des geförderten Materials auf die einzelnen Förderleitungen. Sinkt der Förderdruck in einer der Förderleitungen, wird dieser geringere Druck eine entsprechende Erhöhung der Dosiergasmenge hervorrufen, so dass der Materialstrom durch diese Förderleitung nicht verändert wird. Um eine individuelle Druckregelung in den einzelnen Förderleitungen zu ermöglichen kann jeder Dosiergasanschluss darüber hinaus ein individuelles Regelventil 84 aufweisen.

Um die Eintrittsöffnung 24 herum ist in dem ringförmigen Bereich 20 der Bodenplatte 18 ein in Richtung des Verteilergehäuses geöffneter Ringkanal 44 ausgeführt. Zum Inneren des Verteilergehäuses hin ist dieser Ringkanal 44 mit einem ringförmigen gasdurchlässigen Anströmboden 48 abgedeckt, so dass eine ringförmige Anströmkammer ausgebildet wird. Die Anströmkammer wird über einen Gasanschluss 50 mit einem Auflockerungsgas beaufschlagt, das durch den Anströmboden 48 in das Verteilergehäuse einströmt. Hierdurch werden Ablagerungen im Bereich der Peripherie der Eintrittsöffnung 24 wirksam vermieden. Es ist anzumerken, dass die Gasanschlüsse 50 der verschiedenen Ringkanäle 44 vorzugsweise über eine gemeinsame Ringleitung 86 mit dem Auflockerungsgas versorgt werden.

Zum Einleiten von Schüttgut in die Eintrittsöffnung 24 weist die Vorrichtung 10 für jede Eintrittsöffnung 24 eine Gaseinlassdüse 52 auf, die im Betrieb eine gerichtete Gasströmung mit hoher Geschwindigkeit in Richtung der Eintrittsöffnung 24 erzeugt. Bei dieser Gaseinlassdüse 52 kann es sich beispielsweise um eine Laval-Düse handeln, die der Eintrittsöffnung 24 derart radial gegenüberliegend in dem Verteilergehäuse 12 angeordnet ist, dass die gedachte Verlängerung ihrer Achse mit der Achse 26 der Förderleitung 22 zusammenfällt.

Die Gaseinlassdüse 52 ist über ein Gaszufuhrrohr 54 und beispielsweise einen Drehanschluss an eine Druckgasversorgung 56 angeschlossen, mittels derer die Düse 52 mit einem Druckgas beaufschlagt werden kann. Ähnlich wie oben im Zusammenhang mit den Dosiergasanschlüssen beschrieben, können auch die Druckgasversorgung 56 der verschiedenen Gaseinlassdüsen 52 über eine gemeinsame Ringleitung 88 mit dem Druckgas versorgt werden, wobei zur individuellen Regelung der einzelnen Gaseinlassdüsen 52 in jeder Druckgasversorgung 56 ein individuelles Regelventil 90 vorgesehen sein kann.

Da die Eintrittsöffnung 24 nach oben und nach außen gerichtet ist, muss das Gaszufuhrrohr durch die Wandung 16 des Verteilergehäuses 12 herausgeführt werden Hierzu weist das Verteilergehäuse an der Wandung 16 für jede Eintrittsöffnung einen Stutzen 58 auf, der sich in Richtung der Achse 26 der Eintrittsöffnung 24 nach außen erstreckt. An diesen Stutzen 58 ist ein Anschlussstück 60 anflanschbar, das mit einer passenden Bohrung versehen ist, durch die sich das Gaszufuhrrohr 54 erstreckt. Zur Abdichtung kann beispielsweise eine Stopfbuchse 62 verwendet werden. Zwischen der Stopfbuchse 62 und dem Verteilergehäuse 12 ist in dem Anschlussstück 60 vorzugsweise eine Ringnut um die Bohrung ausgeführt, die von außen über Anschlüsse mit einem Sperrgas beaufschlagt werden kann. Dieses Sperrgas verhindert dann im Betrieb ein Eindringen von Schüttgut in die Bohrung und die Stopfbuchse.

Wird die Gaseinlassdüse 52 mit einem Druckgas beaufschlagt, erzeugt sie im Inneren des Verteilergehäuses 12 eine Gasströmung, die vor der Eintrittsöffnung 24 eine Wirbelzone ausbildet. In dieser Wirbelzone wird das schwer fließende Schüttgut in einen aufgelockerten Zustand versetzt und erhält dabei durch die Ausrichtung der Gasströmung in Richtung der Eintrittsöffnung 24 eine Geschwindigkeitskomponente in Richtung der Eintrittsöffnung 24, so dass das aufgewirbelte Material in diese eintritt.

Die Verwendung einer Laval-Düse zur Erzeugung der gerichteten Gasströmung ermöglicht einerseits eine sehr einfache Regelung des Gasdurchsatzes der Düse 52 durch eine einfache Regelung des Gasvordrucks unabhängig von dem in dem Verteilergehäuse 12 herrschenden Druck. Andererseits erhält man mit einer derartigen Laval-Düse eine sehr gut gerichtete Gasströmung in Richtung der Eintrittsöffnung 24, die aufgrund der hohen Gasgeschwindigkeit das Material auch über eine größere Distanz zwischen Düse und Eintrittsöffnung wirksam in die Förderleitung 24 einleiten kann.

Die Gaseinlassdüse 52 ist vorzugsweise entlang ihrer Achse verfahrbar angeordnet, so dass der Abstand zwischen der Gaseinlassdüse 52 und der Eintrittsöffnung 24 in dem ringförmigen Bereich 20 der Bodenplatte 18 veränderbar ist. Bei der dargestellten Ausgestaltung der Vorrichtung ist die Gaseinlassdüse 52 und das sich axial daran anschließende Gaszufuhrrohr 54 verschiebbar in der Bohrung des Anschlussstücks 60 gelagert. Der Antrieb der Gaseinlassdüse erfolgt dann beispielsweise über einen Axialantrieb 64, der an das hintere Ende des Gaszufuhrrohrs gekoppelt ist. Alternativ kann das Gaszufuhrrohr an seinem hinteren Ende ein Schneckengewinde aufweisen, das mit einem entsprechenden Gewinde in einer an dem Stutzen montierten Gewindeplatte zusammenwirkt. Wird das Gaszufuhrrohr 54 durch einen Antrieb um die eigene Achse gedreht, schraubt sich das Gaszufuhrrohr 54 mit der daran montierten Düse 52 je nach Drehrichtung weiter in das Verteilergehäuse 12 hinein oder aus diesem heraus. Auf diese Weise kann der Abstand zwischen der Eintrittsöffnung 24 und der Gaseinlassdüse beispielsweise zwischen 0 und 30 mm eingestellt werden.

Die Gaseinlassdüse 52 ist vorzugsweise derart ausgestaltet, dass die Eintrittsöffnung 24 in der seitlichen Wandung durch die Gaseinlassdüse 52 verschließbar ist. Hierzu ist die der Eintrittsöffnung 24 zugewandte Stirnseite 68 der Gaseinlassdüse 52 beispielsweise in Form und Durchmesser an die Eintrittsöffnung 24 der Förderleitung 22 angepasst, so dass die Düse beim Verfahren bis an den ringförmigen Bereich 20 der Bodenplatte 18 an der Umrandung der Eintrittsöffnung 24 anliegt und diese verschließt

Die Förderleitung 22 kann daher bei Stillstand der Anlage oder vor deren Anfahren materialdicht verschlossen werden, ohne dass in der Förderleitung 22 Bereiche auftreten, in denen keine Förderströmung vorhanden und das Material demgemäss verdichtet ist. Solche Bereiche, die z.B bei einem einfachen Schieber zwischen dem Schieber und der nächstliegenden Dosiergaszufuhr in der Leitung entstehen, führen regelmäßig zum Verstopfen der Leitung in diesem Bereich. Wird die Eintrittsöffnung durch die Gaseinlassdüse verschlossen, können solche Bereiche ohne Förderströmung nicht entstehen. Es ist anzumerken, dass je nach Bedarf an einzudüsendem Schüttgut einzelne der Förderleitungen durch individuelle Verschiebung der Gaseinlassdüsen verschlossen werden können, während andere Eintrittsöffnungen offen bleiben.. Im zentralen Bereich des Verteilergehäuses 12 weist die dargestellte Vorrichtung eine Leiteinrichtung 70 für das Schüttgut auf. Diese Leiteinrichtung 70 bewirkt, dass Schüttgut, das unter dem Einfluss der Schwerkraft aus dem Vorratsbehälter 14 nach unten in das Verteilergehäuse 12 gelangt, durch die Leiteinrichtung zu den jeweiligen Eintrittsöffnungen 24 der Förderleitungen 22 geleitet wird. In der dargestellten Ausgestaltung umfasst die Leiteinrichtung 70 einen Konus 72, der oberhalb der Bodenplatte 12 in dem Verteilergehäuse montiert ist. Der Konus 72 ist dabei vorzugsweise mittels einer Drehachse 74 in der Bodenplatte 18 drehbar gelagert und mittels eines elektrischen, hydraulischen oder pneumatischen Aktuators 76 antreibbar. Wird der Konus 72 in eine Drehbewegung oder vorzugsweise in eine Hin- und Herbewegung versetzt, wird das an dem Konus herabgleitende Material in Bewegung versetzt, so dass eine Verdichtung des Materials und Brückenbildung verhindert werden können. Um eine sichere Bewegung des Schüttguts durch eine Drehung des Konus 72 zu gewährleisten weist dieser vorzugsweise an seiner Außenfläche mehrere sich radial nach außen erstreckende Leitbleche 78 auf.

### Referenzzeichenliste

- 10: Vorrichtung zum Einleiten von Schüttgut mehrere Förderleitungen
- 12: Verteilergehäuse
- 14: Vorratsbehälter
- 16: Wandung
- 18: Bodenplatte
- 20: ringförmiger Bereich
- 22: Förderleitung
- 24: Eintrittsöffnung
- 26: Achse der Eintrittsöffnung
- 28: Achse des Verteilergehäuses
- 30: Bohrung
- 32: Einsatzteil
- 34: Kragen
- 36: Förderrichtung
- 38: Ringkanal
- 40: Anschluss
- 42: Dosiergasdüse
- 44: Ringkanal
- 48: Anströmboden

- 50: Gasanschluss
- 52: Gaseinlassdüse
- 54: Gaszufuhrrohr
- 56: Druckgasversorgung
- 58: Stutzen
- 60: Anschlussstück
- 62: Stopfbuchse
- 64: Axialantrieb
- 68: Stirnseite
- 70: Leiteinrichtung
- 72: Konus
- 74: Drehachse
- 76: Aktuators
- 78: Leitblech
- 80, 88, 88: Ringleitung
- 82, 84,90: Regelventil

## Patentansprüche

1. Vorrichtung (10) zum gleichzeitigen Einleiten von Schüttgut in eine Vielzahl von Förderleitungen (22), umfassend ein Verteilergehäuse (12) mit einer unteren Bodenplatte (18) in das eine Vielzahl von Förderleitungen (22) von außen derart anschließbar ist, dass jede Förderleitung (22) eine Eintrittsöffnung (24) in einer Wandung des Verteilergehäuses (12) ausbildet, wobei den Eintrittsöffnungen (24) jeweils eine Vorrichtung (52-68) zur Erzeugung einer Gasströmung derart zugeordnet ist, dass die Gasströmung in Richtung der Eintrittsöffnung (24) gerichtet ist, **dadurch gekennzeichnet, dass** die Eintrittsöffnungen (24) derart in der Bodenplatte (18) ausgebildet sind, dass jeweils eine Achse (26) der Eintrittsöffnung (24) mit der Achse (28) des Verteilergehäuses (12) einen spitzen Winkel (α) einschließt.

2. Vorrichtung nach Anspruch 1, wobei die Oberseite der Bodenplatte (18) einen ringförmigen Bereich (20) aufweiset, der in radialer Richtung nach außen hin nach unten geneigt ist, und wobei die Eintrittsöffnungen (24) der Förderleitungen (22) in dem ringförmigen Bereich (20) der Bodenplatte (18) ausgebildet sind.

3. Vorrichtung nach einem der vorhergehenden Ansprüche, wobei das Verteilergehäuse (12) zylinderförmig ausgestaltet ist und wobei der ringförmige Bereich (20) der Bodenplatte (18) an der Peripherie der Bodenplatte (18) angeordnet ist.

4. Vorrichtung nach einem der vorhergehenden Ansprüche, wobei die Vorrichtung (52-68) zur Erzeugung einer Gasströmung in einer seitlichen Wandung (16) des Verteilergehäuses (12) angeordnet ist.

5. Vorrichtung nach einem der vorhergehenden Ansprüche, mit einem Führungselement (70) für das Schüttgut, das derart oberhalb der Bodenplatte (18) in dem Verteilergehäuse (12) angeordnet ist, dass hinabgleitendes Schüttgut zu den Eintrittsöffnungen (24) der Förderleitungen (22) hingeleitet wird.

6. Vorrichtung nach Anspruch 5, wobei das Führungselement (70) um eine Längsachse (74) drehbar in der Bodenplatte (18) gelagert ist.

7. Vorrichtung nach einem der Ansprüche 5 oder 6, wobei das Führungselement (70) konusförmig (72) ausgebildet ist und wobei auf einer Aussenfläche des Führungselements radial sich nach außen erstreckende Leitbleche (78) angeordnet sind.

8. Vorrichtung nach einem der Ansprüche 5 bis 7, wobei das Führungselement mittels eines Aktuators (76) in eine Hin- und Herbewegung um eine Längsachse versetzbar ist.

9. Vorrichtung nach einem der Ansprüche 1 bis 8, wobei das Verteilergehäuse (12) einstückig mit einem Vorratsbehälter (14) ausgestaltet ist.

10. Vorrichtung nach einem der Ansprüche 1 bis 8, wobei das Verteilergehäuse (12) an einen Vorratsbehälter (14) anflanschbar ist.

## Claims

1. A device (10) for simultaneously introducing bulk material into a plurality of feed pipes (22), comprising a distributor housing (12) having a base plate (18) at the bottom, to which distributor housing a plurality of feed pipes (22) may be connected from the outside in such a way that each feed pipe (22) forms an inlet opening (24) in a wall of the distributor housing (12), a device (52-68) for generating a gas flow being associated with each of the inlet openings (24) in such a way that the gas flow is directed towards the inlet opening (24), **characterised in that** the inlet openings (24) are formed in the base plate (18) in such a way that in each case an axis (26) of the inlet opening (24) forms an acute angle (α) with the axis (28) of the distributor housing (12)

2. A device according to claim 1, wherein the top of the base plate (18) comprises an annular region (20), which is inclined radially outwards and downwards, and wherein the inlet openings (24) of the feed pipes (22) are formed in the annular region (20) of the base plate (18).

3. A device according to either one of the preceding claims, wherein the distributor housing (12) is of cylindrical construction and wherein the annular region (20) of the base plate (18) is arranged at the periphery of the base plate (18)

4. A device according to any one of the preceding claims, wherein the device (52-68) for generating a gas flow is arranged in a lateral wall (16) of the distributor housing (12).

5. A device according to any one of the preceding claims, comprising a guide element (70) for the bulk material, which is arranged in such a way above the base plate (18) in the distributor housing (12) that downward sliding bulk material is guided to the inlet openings (24) of the feed pipes (22)

6. A device according to claim 5, wherein the guide element (70) is mounted in the base plate (18) so as to be rotatable about a longitudinal axis (74)

7. A device according to either one of claim 5 or claim 6, wherein the guide element (70) is of conical construction (72) and wherein radially outwardly extending baffle plates (78) are arranged on the outer surface of the guide element

8. A device according to any one of claims 5 to 7, wherein the guide element may be set in to-and-fro motion about a longitudinal axis by means of an actuator (76)

9. A device according to any one of claims 1 to 8, wherein the distributor housing (12) is of one-piece construction with a storage vessel (14)

10. A device according to any one of claims 1 to 8, wherein the distributor housing (12) may be flange-mounted on a storage vessel (14)

## Revendications

1. Dispositif (10) pour introduire simultanément des produits en vrac dans une pluralité de conduites de transport (22), comprenant un boîtier répartiteur (12) avec une plaque de fond (18) inférieure dans lequel une pluralité de conduites de transport (22) peut être raccordée par l'extérieur de telle sorte que chaque conduite de transport (22) forme une ouverture d'entrée (24) dans une paroi du boîtier répartiteur (12), à chaque fois un dispositif (52-68) destiné à générer un écoulement de gaz étant associé aux ouvertures d'entrée (24) de telle sorte que l'écoulement de gaz est orienté en direction de l'ouverture d'entrée (24), **caractérisé en ce que** les ouvertures d'entrée (24) sont réalisées dans la plaque de fond (18) de sorte qu'à chaque fois un axe (26) de l'ouverture d'entrée (24) forme un angle (α) aigu avec l'axe (28) du boîtier répartiteur (12)

2. Dispositif selon la revendication 1, le côté supérieur de la plaque de fond (18) présentant une zone (20) de forme annulaire, qui est inclinée dans la direction radiale vers l'extérieur vers le bas, et les ouvertures d'entrée (24) des conduites de transport (22) étant réalisées dans la zone (20) de forme annulaire de la plaque de fond (18)

3. Dispositif selon l'une quelconque des revendications précédentes, le boîtier répartiteur (12) étant conçu sous forme de cylindre et la zone (20) de forme annulaire de la plaque de fond (18) étant disposée sur la périphérie de la plaque de fond (18)

4. Dispositif selon l'une quelconque des revendications précédentes, le dispositif (52-68) pour générer un écoulement de gaz étant disposé dans une paroi latérale (16) du boîtier répartiteur (12)

5. Dispositif selon l'une quelconque des revendications précédentes, avec un élément de guidage (70) pour le produit en vrac, qui est disposé au-dessus de la plaque de fond (18) dans le boîtier répartiteur (12) de telle sorte que le produit en vrac descendant est dirigé vers les ouvertures d'entrée (24) des conduites de transport (22)

6. Dispositif selon la revendication 5, l'élément de guidage (70) étant logé dans la plaque de fond (18) de façon à pouvoir tourner autour d'un axe longitudinal (74).

7. Dispositif selon l'une quelconque des revendications 5 ou 6, l'élément de guidage (70) étant conçu en forme de cône (72) et des chicanes (78) s'étendant radialement vers l'extérieur étant disposées sur une surface extérieure de l'élément de guidage

8. Dispositif selon l'une quelconque des revendications 5 à 7, l'élément de guidage pouvant être déplacé au moyen d'un actionneur (76) dans un mouvement d'aller et retour autour d'un axe longitudinal

9. Dispositif selon l'une quelconque des revendications 1 à 8, le boîtier répartiteur (12) étant conçu d'une seule pièce avec un récipient de réserve (14)

10. Dispositif selon l'une quelconque des revendications 1 à 8, le boîtier répartiteur (12) pouvant être raccordé par bride à un récipient de réserve (14).
